(19) Europäisches Patentamt / European Patent Office / Office européen des brevets

(11) **EP 3 832 950 A1**

(12) **EUROPÄISCHE PATENTANMELDUNG**

(43) Veröffentlichungstag:
**09.06.2021 Patentblatt 2021/23**

(51) Int Cl.:
**H04L 9/32** (2006.01)    **H04L 9/08** (2006.01)

(21) Anmeldenummer: **19213630.7**

(22) Anmeldetag: **04.12.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **QuantiCor Security GmbH**
**64295 Darmstadt (DE)**

(72) Erfinder: **Bansarkhani, Dr. Rachid El**
**65479 Raunheim (DE)**

(74) Vertreter: **Limbeck, Achim**
**Rechtsanwaltskanzlei Dr. Limbeck**
**Auf dem Schimmerich 11**
**53579 Erpel (DE)**

(54) **KRYPTOGRAPHISCHES SIGNATURSYSTEM**

(57)    Die vorliegende Erfindung betrifft ein kryptographisches Signatursystem (100) zur Erstellung von kryptografischen Signaturen oder Schwellwert-Signaturen mittels einer oder mehreren Signaturvorrichtungen (103), die mit oder ohne einer Vorrichtung (101) interagieren, welche es erlauben, Signaturen für Nachrichten zu generieren.

Das erfindungsgemäße Signatursystem (100) ist dadurch gekennzeichnet, mindestens zwei Signierer zur Erstellung einer Signatur einen kenntnisfreien Beweis für ein zulässiges Element z erzeugen, das $f(z) = u$ erfüllt, oder alternativ mindestens zwei Signierer ein kenntnisfreies Beweissystem anwenden und mindestens einen Beweis für zulässige $z_i$ mit $f(z_i) = u_i$ oder für lineare Transformationen $L_i$ davon liefern, wobei die Anwendung einer bekannten Abbildung $h$ auf die Elemente $z_i$ oder $L_i(z_i)$ ein zulässiges Element ergibt und sich die entsprechenden $u_i$ oder $L_i(u_i)$ unter der gleichen Abbildung $h$ zu u kombinieren lassen, wobei

a) ein Verfahren der Geheimnisteilung auf ein Element u angewendet wird, das als Teil des öffentlichen Schlüssels dient, und mindestens ein Element $u_i$ generiert, und mindestens ein Signierer $T_j$ für eine lineare Falltürfunktion $f$ mindestens ein Urbild $z_j$ von mindestens einem der Elemente $u_j$ mit $f(z_j) = u_j$ oder mindestens ein Urbild von mindestens einem anderen Element erhält, wobei daraus mindestens ein Element $z_j$ mit $f(z_j) = u_j$ von mindestens einem Signierer $T_j$ berechnet werden kann, oder

b) mindestens zwei Signierer $T_j$ mindestens ein Element $z_j$ auswählen, sodass für eine lineare Falltürfunktion oder lineare Einwegfunktion $f$ und linearen Abbildungen $L_j$ der öffentliche Schlüssel das Element $u=\sum_j L_j(f(z_j))$ enthält.

*FIG. 1*

**Beschreibung**

Technisches Gebiet

Die vorliegende Erfindung betrifft ein kryptographisches Signatursystem zur Erstellung von kryptografischen Signaturen oder Schwellwert-Signaturen mittels einer oder mehrerer Signaturvorrichtungen, welche es erlauben, Signaturen für Nachrichten zu generieren. Als Signaturvorrichtung sei nachstehend jegliche Hardware oder Software verstanden, welche kryptografische Signaturen generiert. Kryptografische Signatursysteme stellen auch kryptografische Beweissysteme dar, wobei Signaturen auch kryptografische Beweise umfassen.

Stand der Technik

Ein Signatursystem ermöglicht es, gültige Signaturen für Nachrichten zu generieren. Kryptografische Signaturen können nur mit Hilfe von geheimen Schlüsseln erzeugt werden. Signaturverfahren und Beweissysteme garantieren Unverfälschbarkeit, da Signaturen nur von jenen erzeugt werden können, die im Besitz der geheimen Schlüssel oder geheimen Informationen sind, wie einem oder mehreren Signierern bei einem Signatursystem.

Beispielsweise können Signatursysteme dazu verwendet werden, um eine Vielzahl von Anwendungen zu realisieren, wie beispielsweise sichere Updates oder sichere Authentifikation, aber auch anonyme oder blinde Signaturen, datenschutzerhaltende Zahlungssysteme, anonyme Transaktionen innerhalb der Blockchain oder Schwellwert-Signaturen für Blockchain-Transaktionen.

Viele der aktuell eingesetzten Protokolle basieren jedoch auf Rechenproblemen, die anfällig für Quantencomputerangriffe sind. Weiterhin können in einigen Beweis- und Signatursystemen mehrere Signierer oder Teilnehmer bei der Erstellung von Signaturen oder Schwellwert-Signaturen partizipieren. Bei einem (k,N)-Schwellwert-Signatursystem werden mindestens k Teilnehmer oder Signierer benötigt, um eine Schwellwert-Signatur zu erzeugen. Diese Teilnehmer können Teilsignaturen erzeugen, die wiederum zu einer gültigen und vollständigen Signatur kombiniert werden. Aktuell eingesetzte Verfahren sind sehr ineffizient, sodass ein Einsatz in vielen Szenarien nicht möglich ist oder sich aufgrund dieser Ineffizienzen nicht lohnt. Nachfolgend werden Signierer, Parteien und Teilnehmer synonym verwendet.

Darstellung der Erfindung

Der vorliegenden Erfindung liegt die Aufgabe zugrunde, ein kryptographisches Signatursystem zu schaffen, das die vorgenannten Nachteile ausräumt und das Schutz gegen Quantencomputerangriffe bieten kann.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Signatursystems sind in den abhängigen Unteransprüchen angegeben.

Erfindungsgemäß ist ein Signatursystem der eingangs genannten Art dadurch gekennzeichnet, dass mindestens zwei (k) Signierer (wobei k für mindestens einen oder eine beliebige Anzahl Signieren steht) zur Erstellung einer Signatur einen kenntnisfreien Beweis für ein zulässiges Element $z$ erzeugen, das $f(z) = u$ erfüllt, oder alternativ mindestens zwei Signierer ein kenntnisfreies Beweissystem anwenden und mindestens einen Beweis für zulässige $z_i$ mit $f(z_i) = u_i$ oder für lineare Transformationen $L_i$ davon liefern, wobei die Anwendung einer bekannten Abbildung $h$ auf die Elemente $z_i$ oder $L_i(z_i)$ ein zulässiges Element ergibt und sich die entsprechenden $u_i$ oder $L_i(u_i)$ unter der gleichen Abbildung $h$ zu $u$ kombinieren lassen, wobei

a) ein Verfahren der Geheimnisteilung auf ein Element u angewendet wird, das als Teil des öffentlichen Schlüssels dient, und mindestens ein Element $u_i$ generiert, und mindestens ein Signierer $T_j$ für eine lineare Falltürfunktion $f$ mindestens ein Urbild $z_j$ von mindestens einem der Elemente $u_j$ mit $f(z_j) = u_j$ oder mindestens ein Urbild von mindestens einem anderen Element erhält, wobei daraus mindestens ein Element $z_j$ mit $f(z_j) = u_j$ von mindestens einem Signierer $T_j$ berechnet werden kann,
oder
b) mindestens zwei Signierer $T_j$ mindestens ein Element $z_j$ auswählen, sodass für eine lineare Falltürfunktion oder lineare Einwegfunktion $f$ und linearen Abbildungen $L_j$ der öffentliche Schlüssel das Element $u=\sum_j L_j(f(z_j))$ enthält.

Kurzbeschreibung der Zeichnungen

Weitere Ziele, Merkmale, Vorteile und Anwendungsmöglichkeiten des erfindungsgemäßen Signatursystems ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

Die vorliegende Erfindung ist dabei nicht auf die offenbarten Konzepte und Formen beschränkt, sondern soll all jene Modifikationen, Äquivalente, Analogone und Alternativen umfassen, die mit dieser Erfindungsmeldung und den in dieser Erfindungsmeldung dargelegten Ansprüchen kompatibel sind. Insbesondere erlauben die dargestellten Ausführungsbeispiele der vorliegenden Erfindung verschiedene Modifikationen und andere mögliche Formen.

Die Ausführungsformen in der vorliegenden Erfindung können dabei in Software, Hardware, Firmware oder Kombinationen davon implementiert sein. Weitere mögliche Implementierungsformen der offenbarten Ausführungsformen können Implementierungen als Anweisungen enthalten, die von einem oder mehreren transitorischen oder nicht transitorischen maschinenlesbaren Speichermedien, die von einem oder mehreren Prozessoren verarbeitet werden, getragen oder auf diesen gespeichert werden.

Die offenbarten Ausführungsformen in der vorliegenden Erfindung können weiterhin Merkmale, Strukturen und/oder Verfahren enthalten, die auf eine bestimmte Weise angeordnet und/oder geordnet sind. Es versteht sich jedoch, dass die Anordnung und/oder Reihenfolge von den in den Ausführungsformen und Figuren der vorliegenden Erfindungsmeldung gezeigten abweichen kann.

In den Zeichnungen zeigen

FIG. 1 ein vereinfachtes Blockdiagramm einer Ausführungsform eines Signatursystems;

FIG. 2 ein vereinfachtes Blockdiagramm einer Ausführungsform einer Vorrichtung (101) eines Signatursystems gemäß FIG. 1;

FIG. 3 ein vereinfachtes Blockdiagramm einer Ausführungsform einer Umgebung für eine Vorrichtung (101) gemäß FIG. 2;

FIG. 4 ein vereinfachtes Blockdiagramm einer Ausführungsform einer Umgebung einer Signaturvorrichtung eines Signatursystems gemäß FIG. 1;

FIG. 5 ein vereinfachtes Flussdiagramm einer Ausführungsform eines Verfahrens zum Einrichten eines Signatursystems durch die Vorrichtung (101) eines Signatursystems gemäß FIG. 1;

FIG. 6 ein vereinfachtes Flussdiagramm einer Ausführungsform eines Verfahrens zum Einrichten des Signatursystems durch Signaturvorrichtungen (103) gemäß FIG. 1;

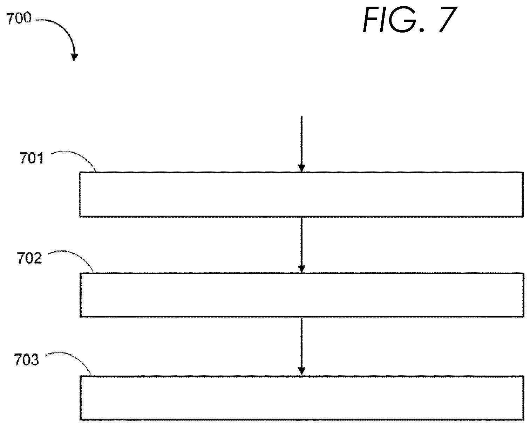

FIG. 7 ein vereinfachtes Flussdiagramm einer Ausführungsform eines Verfahrens zum Erzeugen von Signatur oder Schwellwert-Signaturen durch die Signaturvorrichtungen (103) des Signatursystems gemäß FIG. 1;

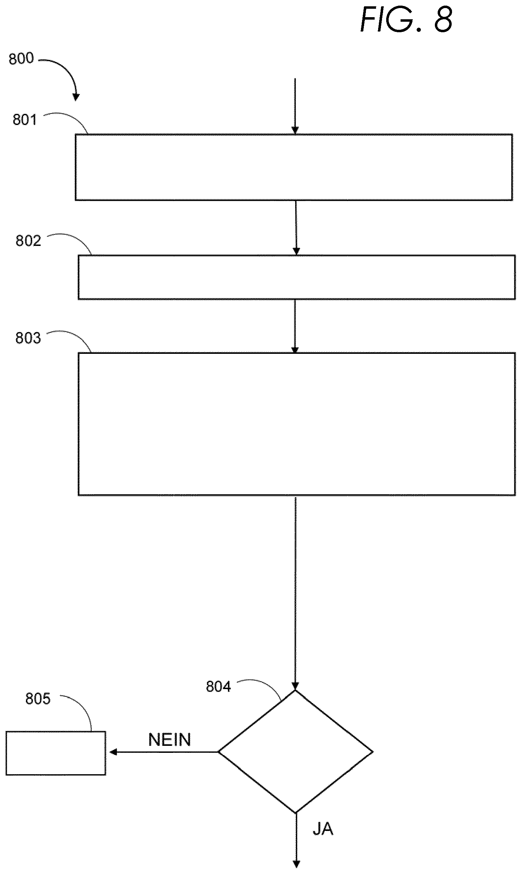

FIG. 8 ein vereinfachtes Flussdiagramm einer Ausführungsform eines Verfahrens zum Verifizieren einer kryptografischen Signatur durch eine Verifiziervorrichtung (104) des Signatursystems gemäß FIG. 1.

Ausführung der Erfindung

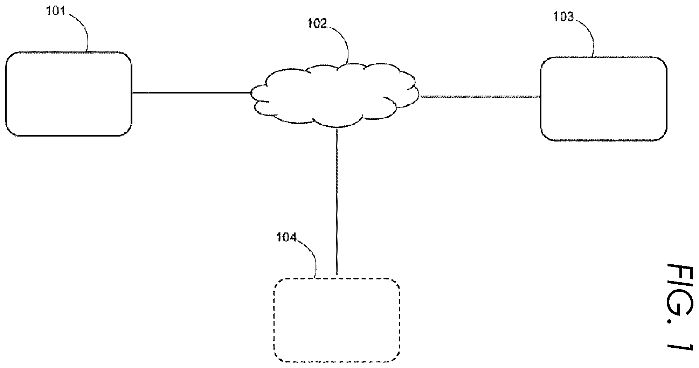

In Fig. 1 wird ein Signatursystem 100 gezeigt. Es versteht sich, dass das vorliegende Signatursystem 100 Quantencomputer-resistente Signaturen ermöglichen kann, wie nachstehend ausführlich beschrieben wird. Genauer gesagt kann das Signatursystem 100 in der veranschaulichenden Ausführungsform Merkmale von Schwellwert-Signaturen unter Verwendung von linearen Falltürfunktionen oder linearen Einwegfunktionen implementieren. In einigen Ausführungsformen baut das Signatursystem 100 auf bestehenden Signaturverfahren auf, die die Fiat-Shamir-Transformation nutzen, und verwendet zusätzlich Maskierungstechniken, Hash-Bäume, Geheimnisteilungsverfahren, um die Möglichkeit der verteilten Erzeugung von unverfälschbaren Signaturen zu realisieren. Es versteht sich, dass das Signatursystem 100 gegenüber Quantencomputerangriffen resistent sein kann. Die Ausführungsform implementiert Unverfälschbarkeit derart, dass eine Teilmenge von Signierern, die einen Teil des privaten Schlüssels halten, gemeinsam gültige Signaturen erzeugen kann.

Es versteht sich, dass die Fiat-Shamir-Transformation einen interaktiven Wissensnachweis (Proof of Knowledge) oder ein Identifikationsverfahren in ein Signaturverfahren umwandelt. Bei einem interaktiven Wissensnachweis überzeugt ein Beweiser (Prover) einen Verifizierer (Verifier), ein Geheimnis zu kennen, das dem Verifizierer nie preisgegeben wird. Nach der Interaktion sollte der Verifizierer überzeugt sein, dass der Beweiser dieses verborgene Geheimnis kennt. Einige gitterbasierte Signatursysteme gehen von einem Identifikationsverfahren aus, bei dem der Beweiser einen öffentlichen und einen geheimen Schlüssel besitzt. Der Beweiser identifiziert sich, indem er ohne Preisgabe des geheimen Schlüssels mittels eines kenntnisfreien Beweises nachweist, dass er den zum öffentlichen Schlüssel assoziierten geheimen Schlüssel besitzt. Das Identifikationsverfahren kann unter Verwendung der Fiat-Shamir-Transformation in ein Signatursystem umgewandelt werden.

Gemäß dem Diagramm in FIG. 1 umfasst das Signatursystem 100, eine Vorrichtung 101, mehrere Signaturvorrichtungen 103, ein Kommunikationsnetz 102 und mehrere Verifiziervorrichtungen 104. In einigen Ausführungsformen kommunizieren mehrere Signaturvorrichtungen 103 über ein Netzwerk miteinander. In einigen anderen Ausführungsformen kann das Signatursystem 100 mehrere Kommunikationsnetzwerke 102, Vorrichtung 101, Signaturvorrichtungen 103 und Verifiziervorrichtungen 104 umfassen, wobei die Kommunikation zwischen der Vorrichtung 101 und den Verifiziervorrichtungen 104 oder die Kommunikation zwischen der Vorrichtung 101 und den Signaturvorrichtungen 103 über verschiedene Netzwerke 104 hergestellt werden können.

In einigen Ausführungsformen kann die Vorrichtung 101 auch durch eine Signaturvorrichtung 103 oder Verifiziervorrichtung 104 gegeben sein. In einigen anderen Ausführungsformen kann die Signaturvorrichtung 103 auch mit einer anderen Vorrichtung 101 kommunizieren. In einigen anderen Ausführungsformen können sich Signaturvorrichtungen 103 bei anderen Verifiziervorrichtungen 104 oder Vorrichtungen 101 authentifizieren.

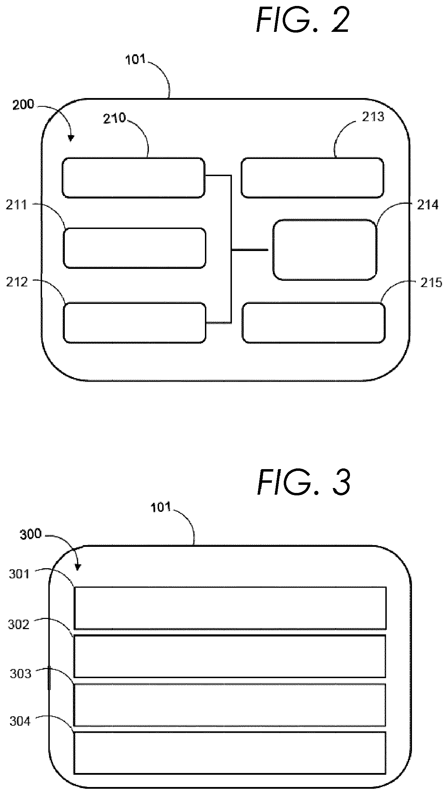

Bezugnehmend auf FIG. 2 können jede Vorrichtung 101, jede Signaturvorrichtung 103 und jede Verifiziervorrichtung 104 als irgendeine Form von Computervorrichtung verkörpert sein, die die Fähigkeiten hat, die Daten zu verarbeiten und die Funktionen hierin zu berechnen. Beispielsweise kann in einigen Ausführungsformen jedes Gerät als Server, Desktop-Computer, Laptop-Computer, Notebook, Netbook, tragbares Computergerät, Router, Mobiltelefon, Smartphone, mobiles Internetgerät und / oder andere alternative Computer- oder Kommunikationsgeräte ausgeführt sein. Jede Vorrichtung 101, jede Signierervorrichtung 103 und jede Verifiziervorrichtung 104 kann einen Prozessor 213, ein Eingabe- / Ausgabesystem ("E / A" -System) 210, einen Speicher 215, einen Datenspeicher 212, ein Kommunikationssystem 211 und ein oder mehrere Eingabe- / Ausgabegeräte oder Peripheriegeräte 214 beinhalten. In einigen Ausführungsformen kann jedes Gerät andere und / oder unterschiedlich weitere Komponenten enthalten. Beispielsweise kann es Komponenten enthalten, die üblicherweise in herkömmlichen Computergeräten zu finden sind (z. B. verschiedene Eingabe-/ Ausgabegeräte, Peripheriegeräte und / oder andere Komponenten).

Bezugnehmend auf FIG. 3 erzeugt jede Vorrichtung 101 eine Umgebung 300 für kryptografische Signaturen. Die Umgebung kann so zusammengesetzt sein, dass sie ein Kryptografiemodul, ein Kommunikationsmodul, ein Verifizierungsmodul und ein Signaturmodul umfasst. Jedes der Module kann in Form von Software, Hardware, Firmware oder Kombinationen davon vorliegen.

Bezugnehmend auf FIG. 3 ist das Signaturmodul derart implementiert, um kryptografische Signaturen in Verbindung mit dem Kryptografiemodul basierend auf den in dieser Erfindungsmeldung beschriebenen Techniken zu erzeugen.

Das Kryptografiemodul 303 ist derart implementiert, um verschiedene kryptografische Funktionalitäten und / oder andere Sicherheitsfunktionen in der Vorrichtung 101 auszuführen. In einigen Ausführungsformen können diese Funktionen in Software / Firmware und / oder auf Hardware ausgeführt werden, wie z.B. ein unabhängiger Krypto-Co-Prozessor ("*Security* Co-Processor"), eine Krypto-Engine ("*Cryptogrophic Engine*"), ein Krypto-Beschleuniger ("*Cryptogrophic Accelerator*") in einem Prozessor 213 oder andere Hardware. In einigen Ausführungsformen kann die Erzeugung von kryptografischem Schlüsselmaterial für verschiedene kryptografische Funktionen wie Verschlüsselung, Entschlüsselung, Signaturerzeugung und Verifizierung auch durch das Kryptografiemodul 303 ausgeführt werden. Dies umfasst in einigen Ausführungsformen auch die sichere Kommunikation mit anderen entfernten Geräten.

Das Überprüfungsmodul 302 ist derart implementiert, um die Gültigkeit einer Signatur zusammen mit einer signierten Nachricht, die von Signatursystemen 101 empfangen wurden, zu überprüfen. In einigen Ausführungsformen kann ein Überprüfungsgerät 104 eine Vorrichtung 101, eine Signierervorrichtung 103 oder ein beliebiges anderes Computergerät sein.

Das Kommunikationsmodul 304 ist derart implementiert, um die Kommunikationsabfragen zwischen Rechengeräten wie der Signaturvorrichtung 103, dem Verifizierungssystem 104 und der Vorrichtung 101 zu verwalten und zu verarbeiten.

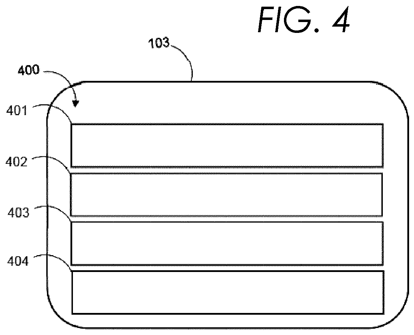

Bezugnehmend auf FIG. 4 erzeugt jede Signaturvorrichtung 103 eine Umgebung 400 für kryptografische Signaturen. Die Umgebung kann so ausgeführt sein, dass sie ein Signaturmodul 401, ein Überprüfungsmodul 402, ein Kryptografiemodul 403 und ein Kommunikationsmodul 404 ähnlich der in FIG. 3 beschriebenen Vorrichtung 101 enthält. Es versteht sich, dass das Signaturmodul 401 derart implementiert ist, dass es in Verbindung mit dem Kryptografiemodul 403 zum Erzeugen von kryptografischen Bindungen ("Commitments") und kryptografischen Beweise sowie Signaturteilen unter Nutzung des privaten Schlüssels für Signatursysteme verwendet wird. Es versteht sich, dass ein oder mehrere Signierer die Erstellung von Signaturen oder Schwellwert-Signaturen mittels einer oder mehreren Signatuvorrichtungen 103 vornehmen können.

Eine detaillierte Implementierung wird unten für eine beispielhafte Ausführungsform des Signatursystems angegeben.

Detaillierte Ausführung der Erfindung

Die Vorrichtung 501 beginnt in einem Block 501, indem eine lineare Falltürfunktion *f* mit der entsprechenden geheimen Falltür als privater Schlüssel gewählt wird. Dazu werden einige Parameter ausgewählt. Beispielsweise können die Parameter einen Ring $R$, einen Modulus $q$ und einen Sicherheitsparameter $n$ sowie weitere Parameter umfassen. Weiterhin wird ein Element u bestimmt, das als Teil des öffentlichen Schlüssels dient.

Bei einer Falltürfunktion $f: X \to U$ kann die Auswertung der Funktion effizient, d.h. in polynomieller Zeit, realisiert werden, wohingegen sich die Berechnung der Inversen ohne Kenntnis der Falltür als schwierig erweist.

In einem Ausführungsbeispiel kann $R$ durch den Ring $\mathbb{Z}[x]/< x^n + 1 >$ oder durch die Menge der $(M_1 x M_2)$ Matrizen $\mathbb{Z}^{M_1 x M_2}$ für $M_1, M_2 \geq 1$ mit ganzzahligen Einträgen oder durch Moduln über Polynomringe instanziiert sein. Entsprechend gilt $R_q = R \bmod q$.

In einem Ausführungsbeispiel kann $f(x)$ durch $A \cdot x \bmod q$ mit $A = [Id, a, g - \hat{a}]$ und $\hat{a} = a \cdot s_1 + s_2$ gegeben sein, wobei $s_1$ und $s_2$ Teil der Falltür sind. Dabei stellt *Id* die Identität dar und *g* beschreibt ein Element.

Die Vorrichtung 101 generiert in Block 502 die geheimen Schlüssel von mindestens einem Signierer $T_i$. Dazu wendet die Vorrichtung 101 in Block 503 ein Verfahren der Geheimnisteilung auf u an ("Secret-Sharing Verfahren"), sodass mindestens k Elemente genügen, um u zu rekonstruieren. Im Rahmen der Geheimnisteilung werden die Elemente $u_1, u_2, ..., u_N$ ermittelt.

In einer Ausführungsform wird Shamirs Secret-Sharing Verfahren zur Geheimnisteilung angewendet.

Die Vorrichtung 101 nutzt in Block 504 den privaten Schlüssel oder die Falltür, um ein zulässiges Urbild $z_i$ von mindestens einem der Elemente $u_i$ mit $f(z_i) = u_i$ oder ein zulässiges Urbild $a_i$ von mindestens einem anderen Element zu berechnen, sodass mindestens ein Signierer $T_i$ bei Vorliegen von $a_i$ ein Urbild $z_i$ mit $f(z_i) = u_i$ effizient, d.h. in polynomieller Zeit, berechnen kann.

In einem Ausführungsbeispiel berechnet die Vorrichtung 101 ein Urbild $a_i$ von $u_i + r_i$ unter Verwendung der privaten Falltür, sodass $f(a_i) = u_i + r_i$ gilt, wobei einem Signierer $T_i$ ein Urbild $b_i$ von $r_i$ bekannt ist. Er setzt $z_i := a_i - b_i$.

In Block 505 werden Urbilder an die entsprechenden Signaturvorrichtungen oder Signierer $T_i$ übermittelt.

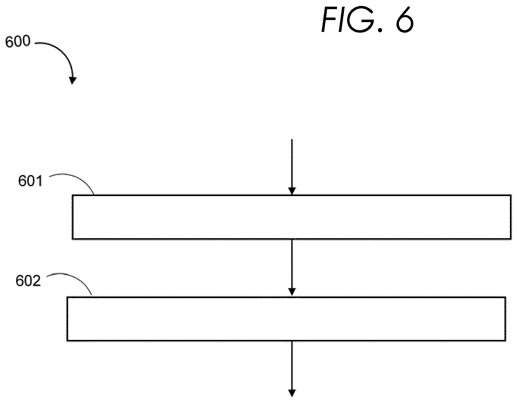

Wird eine lineare Einwegfunktion oder lineare Falltürfunktion verwendet, so kann statt 500 alternativ die Erzeugung der privaten Schlüssel der Signierer auch gemäß FIG. 6 vorgenommen werden, bei der in Block 601 eine lineare Einwegfunktion $f$ erzeugt wird.

In Block 602 erzeugen k Signierer $T_i$ Elemente $z_i$. Dabei ist $u = \sum L_i(u_i)$ Teil des öffentlichen Schlüssels, wobei $L_i$ eine lineare Abbildung repräsentiert und $u_i = f(z_i)$ gilt.

In einer Ausführungsform kann $f$ auch durch eine lineare Falltürfunktion gegeben sein.

In Block 701 wird die zu signierende Nachricht bestimmt.

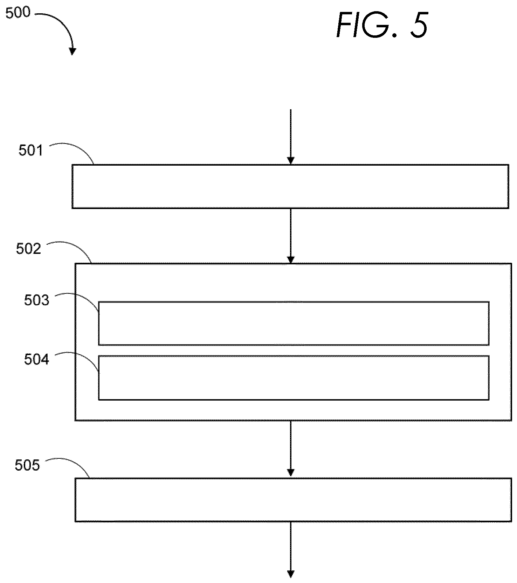

In Block 702 erstellen mindestens k Signierer $T_i$ unter Verwendung von Signaturvorrichtungen 103 einen kryptografischen Beweis für ein zulässiges Element z mit $f(z) = u$. Hier ist darauf hinzuweisen, dass $f$ eine Falltürfunktion gemäß FIG. 5 oder eine Einwegfunktion gemäß FIG. 6 sein kann.

In einer Ausführungsform erstellen mindestens k Signierer $T_i$ jeweils einen kryptografischen Beweis für ein zulässiges $z_i$ mit $f(z_i) = u_i$ oder für $L_i(z_i)$ mit $f(L_i(z_i)) = L_i(u_i)$ und linearer Abbildung $L_i$, wobei die Anwendung einer bekannten oder öffentlichen Abbildung h auf die Elemente $z_i$ oder $L_i(z_i)$ ein zulässiges Element z ergibt und sich die entsprechenden $u_i$ oder $L_i(u_i)$ unter der gleichen Abbildung h zu u kombinieren lassen. Die Gesamtheit der kryptografischen Beweise stellt somit einen vollwertigen Beweis für ein zulässiges z mit $f(z) = u$ dar, da mindestens k Elemente $u_i$ genügen, um das Element u des öffentlichen Schlüssels zu rekonstruieren.

In einem Ausführungsbeispiel lässt sich die Abbildung h aus der öffentlichen oder bekannten Rekonstruktionsabbildung des verwendeten Verfahrens für die Geheimnisteilung ableiten, wobei für die Berechnung von z die Elemente $u_i$ oder $L_i(u_i)$ durch die entsprechenden $z_i$ oder $L_i(z_i)$ in der Abbildung ersetzt werden.

In einem Ausführungsbeispiel gilt $u = \sum L_i(u_i)$, wobei $L_i$ eine lineare Abbildung ist. Möchten k Signierer $T_i$ eine Schwellwert-Signatur erzeugen, so wird ein kenntnisfreier Beweis für ein zulässiges Element $z = \sum L_i(z_i)$ mit $u = f(z)$ erzeugt oder alternativ erzeugen die Signierer einen kenntnisfreien Beweis für $z_i$ mit $u_i = f(z_i)$ oder für $L_i(z_i)$ mit $L_i(u_i) = f(L_i(z_i))$, sodass $z = \sum L_i(z_i)$ ein zulässiges Element darstellt und $u = f(z)$ gilt.

In einem Ausführungsbeispiel werden gitterbasierte Falltürfunktionen verwendet, bei der die Norm der Elemente z und $z_i$ im Vergleich zum verwendeten Modulus klein sein müssen.

In einem Ausführungsbeispiel werden für die Erzeugung eines kryptografischen Beweises oder einer Signatur Maskierungsterme $y_j$ gewählt und daraus kryptografische Bindungen $\hat{y}_j = f(y_j)$ berechnet, deren Hash-Werte als Blätter eines Hash-Baumes fungieren. Die Wurzel des Hash-Baumes wird im Rahmen der Fiat-Shamir Transformation als Eingabe in ein Zufallsorakel oder Quantenzufallsorakel zur Berechnung von kryptografischen Aufforderungen (Challenge) übergeben.

In einem Ausführungsbeispiel enthält der kryptografisch Beweis eines Signierers $T_i$ das Element $z_i \cdot c + y_j$ mit $f(z_i) = u_i$ oder $a_i \cdot c + y_j - b_i \cdot c$ mit $f(a_i - b_i) = u_i$, wobei c eine kryptografische Aufforderung darstellt, die im Rahmen der Fiat-Shamir Transformation ermittelt wurde und $y_j$ als Maskierungsterm für das Element $z_i \cdot c$ oder $a_i \cdot c$ oder $a_i \cdot c - b_i \cdot c$ verwendet wird.

In einem anderen Ausführungsbeispiel enthält der kryptografische Beweis eines Signierers $T_i$ das Element $a_i \cdot c + y_j - b_i \cdot c$ mit $f(a_i - b_i) = u_i$, wobei $a_i$ von der Vorrichtung 101 als Urbild ermittelt wurde und $b_i$ dem Signierer bekannt ist.

In einem anderen Ausführungsbeispiel wählen mindestens k Teilnehmer $T_i$ Maskierungsterme $y_j^i$ aus und berechnen daraus kryptografische Bindungen

$$\hat{y}_j^i = f(y_j^i).$$

Kryptografische Bindungen eines Signierers werden mit kryptografischen Bindungen anderer Teilnehmer zu

$$\hat{y}_l = h(\hat{y}_j^{i_1}, ..., \hat{y}_t^{i_k})$$

kombiniert. Dies erfolgt unter einer öffentlichen oder bekannten Abbildung h, die auch dazu verwendet wird, um u mit Hilfe der assoziierten Elemente $u_i$ zu rekonstruieren. Aus den resultierenden Kombinationen von kryptografischen Bindungen $\hat{y}_l$ lassen sich Blätter eines Hash-Baumes ermitteln. Die Wurzel des Hash-Baumes wird im Rahmen der Fiat-Shamir Transformation als Eingabe in ein Zufallsorakel oder Quantenzufallsorakel zur Berechnung einer kryptografischen Aufforderungen c übergeben. Die von den Si-

gnierern $T_i$ berechneten $\hat{v}_i = z_i \cdot c + y_j^i$ werden mit Hilfe der Abbildung h zum Element $x = h(\hat{v}_{i_1},...,\hat{v}_{ik})$ kombiniert, das als Teil des kenntnisfreien Beweises fungiert.

In einem Ausführungsbeispiel wird Shamirs Geheimnisteilung verwendet, bei der sich die Abbildung h aus der Formel für die Rekonstruktion ableiten lässt, wie z.B. mittels Lagrange Interpolation. Um ein Element x mit $f(x) - u \cdot c = \hat{y}_l$ zu berechnen, werden die Elemente $u_i$ in der Formel durch die entsprechenden Elemente $\hat{v}_i$ ersetzt. Analog dazu kann $\hat{y}_l$ berechnet werden, indem $u_{i_1},...,u_{ik}$ in der Formel durch die kryptografischen Bindungen $\hat{y}_j^{i_1}, ..., \hat{y}_t^{ik}$ substituiert wird.

In einer Ausführungsform wird auf den Hash-Baum verzichtet. Kombinationen der kryptografischen Bindungen werden im Rahmen der Fiat-Shamir Transformation direkt als Eingabe in ein Zufallsorakel oder Quantenzufallsorakel zur Berechnung der kryptografischen Aufforderungen c übergeben.

In einer Ausführungsform kann ein Zufallsorakel oder Quantenzufallsorakel mittels einer Hash-Funktion oder einem anderen Mechanismus zur Erzeugung von Zufallszahlen instanziiert werden.

In Block 703 wird die Signatur oder Schwellwert-Signatur, die den kryptografischen Beweis umfasst, an eine Verifiziervorrichtung 103 übertragen.

In Block 801 wird die Signatur oder Schwellwert-Signatur von der Verifiziervorrichtung 103 empfangen.

In Block 802 wird der öffentliche Schlüssel bestimmt.

Die Verifiziervorrichtung 104 überprüft in Block 803, ob die Signatur oder der kryptografische Beweis gültig ist. Dabei wird überprüft, ob z ein zulässiges Element darstellt, das $u = f(z)$ erfüllt.

In Block 804 wird der Ausgang der Überprüfung bestimmt.

Wenn die Signatur oder der Beweis ungültig sind, so werden in Block 805 entsprechende Maßnahmen ergriffen.

In einem Ausführungsbeispiel setzt sich die Signatur aus mehreren Beweisen zusammen, so wird auch überprüft, ob die Elemente $z_i$ oder $L_i(z_i)$ zulässig sind und die Anwendung einer öffentlichen oder bekannten Abbildung h auf die Elemente $z_i$ oder $L_i(z_i)$ ein zulässiges Element z ergibt und die Anwendung von h auf die Elemente $f(z_i)$ oder $f(L_i(z_i))$ das Element u ergibt. Es ist hierbei darauf hinzuweisen, dass die Verifiziervorrichtung die Elemente z und $z_i$ nicht kennen muss, um die Zulässigkeit zu überprüfen.

In einem Ausführungsbeispiel fließt die Wurzel eines Hash-Baumes in die Berechnung des Beweises oder Signatur mit ein. Der Verifizierer überprüft dann zusätzlich auch die Gültigkeit des übergebenen Pfades vom Blatt bis zur Wurzel des Baumes. Eine ähnliche Überprüfung des Pfades findet bei Merkle-Bäumen statt. In einem Ausführungsbeispiel kann mit den Informationen aus dem Beweis ein Blatt des Baumes berechnet werden und die Wurzel rekonstruiert werden. In einem Ausführungsbeispiel könnte anschließend überprüft werden, ob die ermittelte Wurzel auch in die Berechnung des Beweises eingeflossen ist.

## Patentansprüche

1. Kryptographisches Signatursystem (100) zur Erstellung von Signaturen für Nachrichten, **dadurch gekennzeichnet, dass** mindestens zwei Signierer zur Erstellung einer Signatur einen kenntnisfreien Beweis für ein zulässiges Element z erzeugen, das $f(z) = u$ erfüllt, oder alternativ mindestens zwei Signierer ein kenntnisfreies Beweissystem anwenden und mindestens einen Beweis für zulässige $z_i$ mit $f(z_i) = u_i$ oder für lineare Transformationen $L_i$ davon liefern, wobei die Anwendung einer bekannten Abbildung h auf die Elemente $z_i$ oder $L_i(z_i)$ ein zulässiges Element ergibt und sich die entsprechenden $u_i$ oder $L_i(u_i)$ unter der gleichen Abbildung h zu u kombinieren lassen, wobei

   a) ein Verfahren der Geheimnisteilung auf ein Element u angewendet wird, das als Teil des öffentlichen Schlüssels dient, und mindestens ein Element $u_i$ generiert, und mindestens ein Signierer $T_j$ für eine lineare Falltürfunktion f mindestens ein Urbild $z_j$ von mindestens einem der Elemente $u_j$ mit $f(z_j) = u_j$ oder mindestens ein Urbild von mindestens einem anderen Element erhält, wobei daraus mindestens ein Element $z_j$ mit $f(z_j) = u_j$ von mindestens einem Signierer $T_j$ berechnet werden kann, oder

   b) mindestens zwei Signierer $T_j$ mindestens ein Element $z_j$ auswählen, sodass für eine lineare Falltürfunktion oder lineare Einwegfunktion f und linearen Abbildungen $L_j$ der öffentliche Schlüssel das Element $u=\sum_j L_j(f(z_j))$ enthält.

2. Kryptographisches Signatursystem (100) nach Anspruch 1, **dadurch gekennzeichnet, dass** zur Generierung von mindestens einem Urbild $z_j$ von mindestens einem der Elemente $u_j$ eine Falltür verwendet wird.

3. Kryptographisches Signatursystem (100) nach Anspruch 1, **dadurch gekennzeichnet, dass** eine Vorrichtung (101)

   a) ein Verfahren der Geheimnisteilung auf ein Element u anwendet und mindestens ein Ele-

ment $u_j$ generiert, und

b) zur Generierung von mindestens einem Urbild $z_j$ von mindestens einem der Elemente $u_j$ eine Falltür verwendet.

4. Kryptographisches Signatursystem (100) nach Anspruch 1,
**dadurch gekennzeichnet, dass**
mindestens ein Signierer $T_j$ ein Urbild $a_j$ von $u_j + r_j$ oder $u_j - r_j$ erhält, wobei die mindestens ein Signierer $T_j$ ein Urbild $b_j$ von $r_j$ kennen, sodass die mindestens ein Signierer $T_j$ ein Urbild $z_j$ mit $u_j = f(z_j)$ berechnen können.

5. Kryptographisches Signatursystem (100) nach Anspruch 1,
**dadurch gekennzeichnet, dass**
mindestens ein Signierer $T_j$ einen kryptografischen Beweis für die Kenntnis von $a_j = z_j + b_j$ oder $a_j = z_j - b_j$ mit $f(a_j) = u_j + r_j$ oder $f(a_j) = u_j + r_j$ erzeugen, wobei die mindestens ein Signierer $T_j$ ein Urbild $b_j$ von $r_j$ kennen und diesen nicht geheim halten, sodass daraus ein Beweis für $z_j$ mit $u_j = f(z_j)$ ermittelt werden kann.

6. Kryptographisches Signatursystem (100) nach einem der vorangegangenen Ansprüchen,
**dadurch gekennzeichnet, dass**
die lineare Abbildung $f$ durch eine gitterbasierte Falltürfunktion gegeben ist mit $f(x) = A \cdot x \bmod q$.

7. Kryptographisches Signatursystem (100) nach einem der vorangegangenen Ansprüchen,
**dadurch gekennzeichnet, dass**
ein Shamirs Secret-Sharing Verfahren verwendet wird und $h$ sich aus der Rekonstruktionsabbildung des Verfahrens ableiten lässt, mit der sich jeweils die Elemente $u$ und $z$ rekonstruieren lassen, sodass $f(z) = u$ erfüllt ist.

8. Kryptographisches Signatursystem (100) nach einem der vorangegangenen Ansprüchen, mit mindestens einer Signaturvorrichtung,
**dadurch gekennzeichnet, dass**
mindestens ein Signierer oder mindestens eine Signaturvorrichtung (103)

   a) Maskierungsterme $y_i$ erzeugt sowie kryptografische Bindungen darüber berechnet $\hat{y}_i$ und Hash-Werte von den kryptografischen Bindungen berechnet, die als Blätter eines Hash-Baumes fungieren, und
   b) einen kryptografischen Beweis erzeugt, in der die Wurzel des Hash-Baumes einfließt.

9. Kryptographisches Signatursystem (100) nach einem der vorangegangenen Ansprüche, mit mindestens einer Signaturvorrichtung,
**dadurch gekennzeichnet, dass**
mindestens eine Signaturvorrichtung (103) oder mindestens ein Signierer

   a) Maskierungsterme $y_i$ erzeugt sowie kryptografische Bindungen darüber berechnet $\hat{y}_i$, und
   b) die kryptografischen Bindungen mit kryptografischen Bindungen anderer Signierer linear kombiniert werden.

10. Kryptographisches Signatursystem (100) nach einem der vorangegangenen Ansprüche,
**dadurch gekennzeichnet, dass**

   a) Hash-Werte von linear kombinierten kryptografischen Bindungen berechnet werden, die als Blätter eines Hash-Baumes fungieren, und
   b) die Wurzel des Hash-Baumes in die Erzeugung einer Signatur einfließt.

11. Kryptographisches Signatursystem (100) nach einem der vorangegangenen Ansprüche,
**dadurch gekennzeichnet, dass**

   a) mindestens ein Signierer $T_j$ einen kryptografischen Beweis unter Nutzung des geheimen Schlüssels erzeugt, in der die Wurzel eines Hash-Baumes einfließt, und
   b) dieser Beweis mit den Beweisen anderer Signierer zu einem vollwertigen Beweis für ein zulässiges Element z mit $f(z) = u$ kombiniert werden.

12. Kryptographisches Signatursystem (100) nach einem der vorangegangenen Ansprüchen,
**dadurch gekennzeichnet, dass**
kryptografische Bindungen von Maskierungstermen $y_i$ mittels $\hat{y}_i = A \cdot y_i \bmod q$ berechnet werden.

13. Kryptographisches Signatursystem (100) nach einem der vorangegangenen Ansprüchen,
**dadurch gekennzeichnet, dass**
die Wurzel von mindestens einer Baumstruktur oder mindestens eines Hash-Baumes mit mehr als einem Knoten in die Erzeugung von kryptografischen Beweisen oder Signaturen einfließen, wobei sich Blätter oder Knoten des Baumes aus kryptografischen Bindungen ermitteln lassen.

14. Kryptographisches Signatursystem (100) nach einem der vorangegangenen Ansprüchen,
**dadurch gekennzeichnet, dass**
die Blätter des Baumes Hash-Werte von kryptografischen Bindungen sind.

15. Kryptographisches Signatursystem (100) nach einem der vorangegangenen Ansprüchen,
**dadurch gekennzeichnet, dass**

mindestens ein Signierer oder mindestens eine Signaturvorrichtung (103) einen kryptografischen Beweis erzeugt, in der auch die Wurzel der Hash-Bäume oder Baumstruktur von anderen Signierern oder Signaturvorrichtungen (103) einfließen.

FIG. 1

*FIG. 2*

*FIG. 3*

*FIG. 4*

500

FIG. 5

501

502

503

504

505

FIG. 6

600

601

602

700

FIG. 7

701

702

703

FIG. 8

800

801

802

803

804 NEIN

805

JA

Europäisches Patentamt
European Patent Office
Office européen des brevets

**EUROPÄISCHER RECHERCHENBERICHT**

Nummer der Anmeldung

EP 19 21 3630

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Rachid El Bansarkhani ET AL: "Direct Anonymous Attestation from Lattices", IACR eprint, 14. Oktober 2017 (2017-10-14), XP055563364, Cryptology ePrint Archive Gefunden im Internet: URL:https://eprint.iacr.org/2017/1022.pdf [gefunden am 2019-02-28] * Seite 2 - Seite 4 * ----- | 1-15 | INV. H04L9/32 H04L9/08 |
| A | DESMEDT Y G: "THRESHOLD CRYPTOGRAPHY", EUROPEAN TRANSACTIONS ON TELECOMMUNICATIONS AND RELATEDTECHNOLOGIES, AEI, MILANO, IT, Bd. 5, Nr. 4, 1. Juli 1994 (1994-07-01), Seiten 35-43, XP000460560, ISSN: 1120-3862 * das ganze Dokument * ----- | 1-15 | |

**RECHERCHIERTE SACHGEBIETE (IPC)**

H04L

Der vorliegende Recherchenbericht wurde für alle Patentansprüche erstellt

| Recherchenort | Abschlußdatum der Recherche | Prüfer |
|---|---|---|
| München | 3. Juni 2020 | Apostolescu, Radu |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................................

& : Mitglied der gleichen Patentfamilie, übereinstimmendes Dokument

EPO FORM 1503 03.82 (P04C03)